# EUROPEAN PATENT SPECIFICATION

(11) **EP 2 342 432 B1**
(45) Date of publication and mention of the grant of the patent: **16.09.2015**
(21) Application number: 09818354.4
(22) Date of filing: 29.09.2009
(51) Int. Cl.: F01N 3/20, F01N 3/36, B01F 3/04, B01F 5/04

(54) **UREA INJECTOR NOZZLE**
HARNSTOFFINJEKTIONSDÜSE
BUSE D INJECTION D URÉE

(30) Priority: 30.09.2008 US 101414 P
(43) Date of publication of application: 13.07.2011
(73) Proprietor: Cummins Filtration IP, INC., Minneapolis, MN 55432 (US)
(72) Inventor: CARTWRIGHT, Doug, Aldgrough St. John, Richmond DL 11 7SU (GB); GHARAHBAGHI, Shadi, Birmingham B16 8FP (GB)
(74) Representative: Beyer, Andreas
(86) International application number: PCT/US2009/058734
(87) International publication number: WO 2010/039683

(56) References cited:
- EP-A1- 1 669 566
- EP-A1- 1 816 324
- WO-A1-2006/046368
- WO-A1-2007/091969
- DE-A1- 10 241 697
- DE-A1-102005 002 317
- JP-A- 7 124 439
- JP-A- 54 046 169
- JP-A- 2003 010 644
- US-A- 5 477 685
- US-B1- 6 526 746

## Description

### CROSS REFERENCE TO RELATED APPLICATIONS

The present application claims the benefit of U.S. Provisional Patent Application 61/101,414, filed September 30, 2008.

### BACKGROUND OF THE INVENTION

As governmental regulation of engine exhaust emissions continues to increase, engine after-treatment applications must become more efficient to meet stricter emissions standards. For example, the reduction of engine NOx emissions is of particular concern. Selective catalytic reduction ("SCR") of NOx by nitrogen compounds, such as ammonia or urea, has proven to be effective in engine applications.

WO 2007/091969 A1 discloses a device for injection of a liquid agent, such as fuel or reducing agent, into the exhaust line from a combustion engine. The device comprises a nozzle arrangement having a nozzle head, from which the liquid agent is injectable into the exhaust line. The nozzle arrangement comprises a first conduit leading to the nozzle head for supply of compressed gas, preferably in the form of compressed air, to the nozzle head, and a second conduit leading to the nozzle head for supply of said liquid agent to the nozzle head. The nozzle head is provided with at least one outlet opening connected to the first conduit and to the second conduit, through which outlet opening said liquid agent is injectable into the exhaust line under atomization thereof after mixing with compressed gas in a mixing zone inside the nozzle head.

JP 2003 010644 A discloses an urea water evaporator of a nitrogen oxide removal apparatus. In the evaporator, an opening part formed in a side wall of an evaporator vessel is fixed in an opening part of a pipe for a waste gas while being kept facing on the downstream side of a waste gas, so that the evaporator can be installed in the pipe for the waste gas. The plate for preventing dripping of urea water is formed in the bottom face part of the evaporator vessel, and therefore, when urea water as a reducing agent, from the evaporator vessel is jetted out through the opening part, the urea water is not deposited on the pipe but deposited on the plate for preventing dripping.

EP 1 816 324 A1 discloses a structure of a liquid reducing agent injection nozzle in an exhaust emission purifying system arranged to inject and supply a liquid reducing agent into an exhaust flow passage so as to reduce and purify NOx in exhaust gas. A nozzle tip end portion of the liquid reducing agent injection nozzle which protrudes from a wall surface of an exhaust flow passage into the passage, is bent obliquely with respect to an exhaust flow direction, or nozzle holes of the nozzle tip end portion are formed so as to tilt in the exhaust flow direction with respect to a radial direction perpendicular to a center axis of the nozzle tip end portion or are unevenly distributed in the circumferential direction of the nozzle tip end portion.

### SUMMARY OF THE INVENTION

In one embodiment of the present invention a method of delivering a reducing agent into an exhaust gas stream of an internal combustion engine comprises passing the reducing agent through a nozzle connection to an inlet of an injector pipe that passes through an injector cap connected to a nozzle body. The injector pipe is coaxial along a portion of its length with the nozzle body. The method further comprises spraying the reducing agent that exits an outlet of the injector pipe through a spray head having three to four orifices substantially aligned in a horizontal plane and only oriented generally parallel to a flow direction of the exhaust gas stream.

In one refinement of the embodiment the reducing agent is sprayed through a spray head having three orifices that include a middle orifice symmetric about a center axis of the flow direction of the exhaust gas stream, and first and second orifices symmetrically positioned to either side of the middle orifice.

In another refinement of the embodiment the reducing agent exits the spray head through the first and second orifices at an angle of no more than about ten degrees relative to the center axis of the flow direction of the exhaust gas stream.

In another refinement of the embodiment the reducing agent is sprayed through a spray head having four orifices that are symmetric about a center axis of the flow direction of the exhaust gas stream, and wherein a center of each orifice is angled with respect to the center axis by no more than about fifteen degrees.

In another refinement of the embodiment the reducing agent exits the spray head through an inner pair and an outer pair of orifices. The inner pair of orifices are angled with respect to the center axis by no more than about five degrees.

In another embodiment of the present invention an injector nozzle assembly for delivering a reducing agent fluid stream into an exhaust gas stream comprises a connector having an inlet for fluidly connecting to a reducing agent fluid source. The assembly further includes a cap that is connected to a nozzle body having a frustoconical portion. The assembly also includes an injector pipe having a length along an axis and passing through an opening in the cap into and through an at least partially hollow internal volume of the nozzle body. The injector pipe has an inlet fluidly connected to the connector and an outlet fluidly connected to a spray head. The spray head includes three to four substantially radial injection orifices. The injection orifices on the spray head are substantially aligned in a horizontal plane, and only oriented generally parallel to a flow direction of the exhaust gas stream.

In one refinement of the embodiment the spray head has three injection orifices that include a middle orifice, and first and second outer orifices. The first and second outer orifices are symmetrically positioned on a circumference of the spray head to each side of the middle orifice.

In another refinement of the embodiment the first and second outer orifices are each offset about ten degrees from the middle orifice.

In another refinement of the embodiment the injector pipe has no bends and has a pipe diameter. The spray head has an open end adjacent to a first cylindrical hollow internal volume with a first diameter larger than the pipe diameter. The spray head has a second hollow internal volume with a second diameter less than the pipe diameter, the radial orifices being fluidly connected to the second hollow internal volume, the spray head and injector pipe both being made of stainless steel.

In another refinement of the embodiment each orifice has a diameter of about 0.55 mm. The nozzle body has a first cylindrical portion at one end that is connected to the cap, and a second cylindrical portion at the other end that is connected to the injector pipe, and the frustoconical portion is between the cylindrical portions.

Another refinement of the embodiment further includes a spring pin positioned in a radially extending recess in the cap. The spring pin protrudes from the recess and extends along the center axis of the flow direction.

In another refinement of the embodiment the spray head has four injection orifices that include two inner orifices and two outer orifices. The inner orifices are symmetric on either side of a center axis of the flow direction.

In another refinement of the embodiment the outer orifices are also symmetric on either side of the center axis of the flow direction.

In another refinement of the embodiment the inner orifices are spaced from adjacent outer orifices by about ten degrees on a circumference of the spray head. The inner orifices are spaced from each other by about ten degrees on the circumference of the spray head.

In another refinement of the embodiment the injector pipe has no bends and has a pipe diameter. The spray head has an open end adjacent to a first cylindrical hollow internal volume with a first diameter larger than the pipe diameter. The spray has a second hollow internal volume with a second diameter less than the first diameter, the radial orifices fluidly connected to the second hollow internal volume, the spray head and injector pipe both being made of stainless steel.

In another refinement of the embodiment each orifice has a diameter of about 0.5 mm.

Another refinement of the embodiment further includes a spring pin positioned in a radially extending recess in the cap. The spring pin protrudes from the recess and extends along the center axis of the flow direction.

### BRIEF DESCRIPTION OF THE FIGURES

FIG. 1 is a perspective view of an embodiment of an injector nozzle assembly.
FIG. 2 is a side view of the injector nozzle assembly of FIG. 1.
FIG. 3 is a cross-sectional view of FIG. 2.
FIG. 4 is a perspective view of an embodiment of the connector of FIG. 1.
FIG. 5 is a side view of the connector of FIG. 4.
FIG. 6 is a cross-sectional view of the connector of FIG. 5.
FIG. 7 is a perspective view of an embodiment of the cap of FIG. 1.
FIG. 8 is a side view of the cap of FIG. 4.
FIG. 9 is a cross-sectional view of the cap of FIG. 8.
FIG. 10 is a detail view of a portion of FIG. 9.
FIG. 11 is a perspective view of an embodiment of the spring pin of FIG. 1.
FIG. 12 is a side view of the spring pin of FIG. 11.
FIG. 13 is an end view of FIG. 12.
FIG. 14 is a perspective view of an embodiment of the nozzle body of FIG. 1.
FIG. 15 is a side view of the nozzle body of FIG. 14.
FIG. 16 is a cross-sectional view of the nozzle body of FIG. 15.
FIG. 17 is a perspective view of an embodiment of the injector pipe of FIG. 1.
FIG. 18 is a side view of the injector pipe of FIG. 17.
FIG. 19 is an end view of the injector pipe of FIG. 18.
FIG. 20 is a side view of an embodiment of the injector jet head having three orifices for use in the injector nozzle assembly of FIG. 1.
FIG. 21 is a sectional view of the injector jet head of FIG. 20.
FIG. 22 is a sectional view of the injector jet head of FIG. 21.
FIG. 23 is a side view of an embodiment of the injector jet head having four orifices for use in the injector nozzle assembly of FIG. 1.
FIG. 24 is a sectional view of the injector jet head of FIG. 23.
FIG. 25 is a sectional view of the injector jet head of FIG. 24.

### DETAILED DESCRIPTION OF THE PREFERRED EMBODIMENTS

For purposes of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

Emissions advantages result from the appropriate injection of an aqueous solution of urea into the exhaust gas stream channel. The details of the chemical processes of reducing NOₓ using ammonia (that is difficult to store in a vehicle, hence the use of an aqueous solution of urea) are known to those of ordinary skill in the art and will not be discussed further herein. The present invention being primarily concerned with improvements to portions or the entirety of an injector nozzle assembly. The injector nozzle assembly being used for injecting a fluid stream including urea into an engine exhaust gas stream.

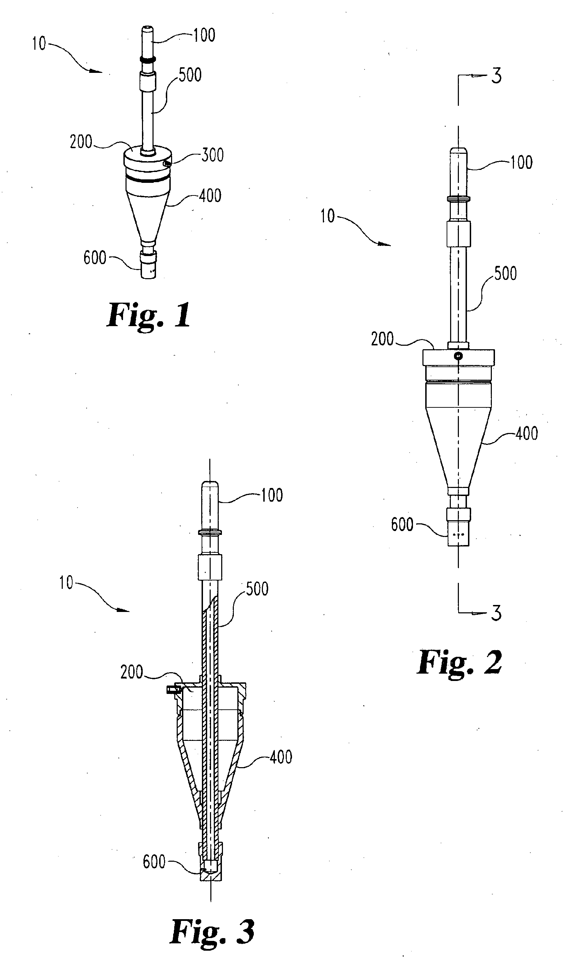

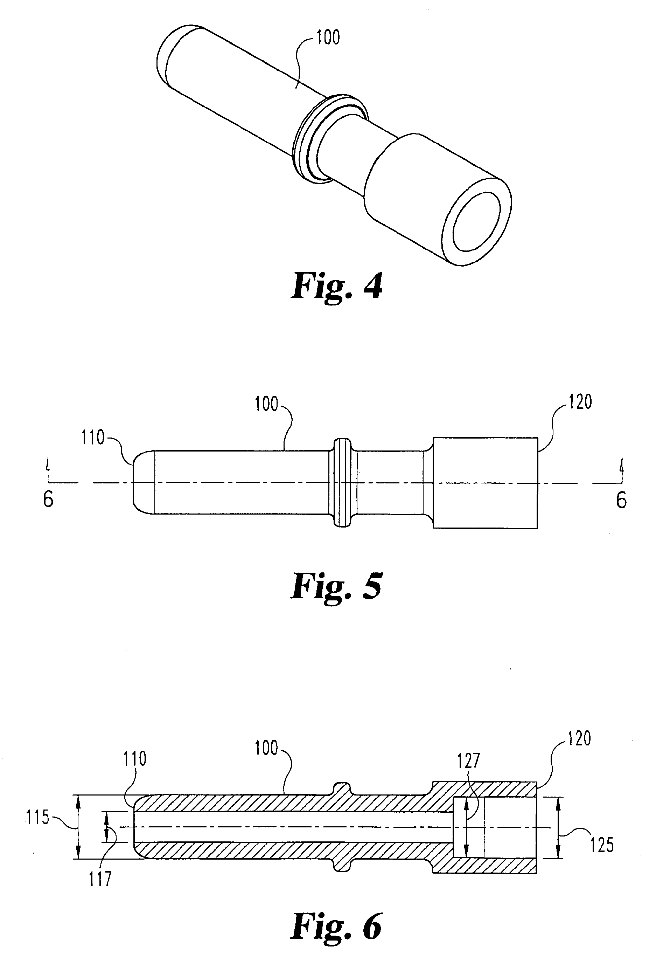

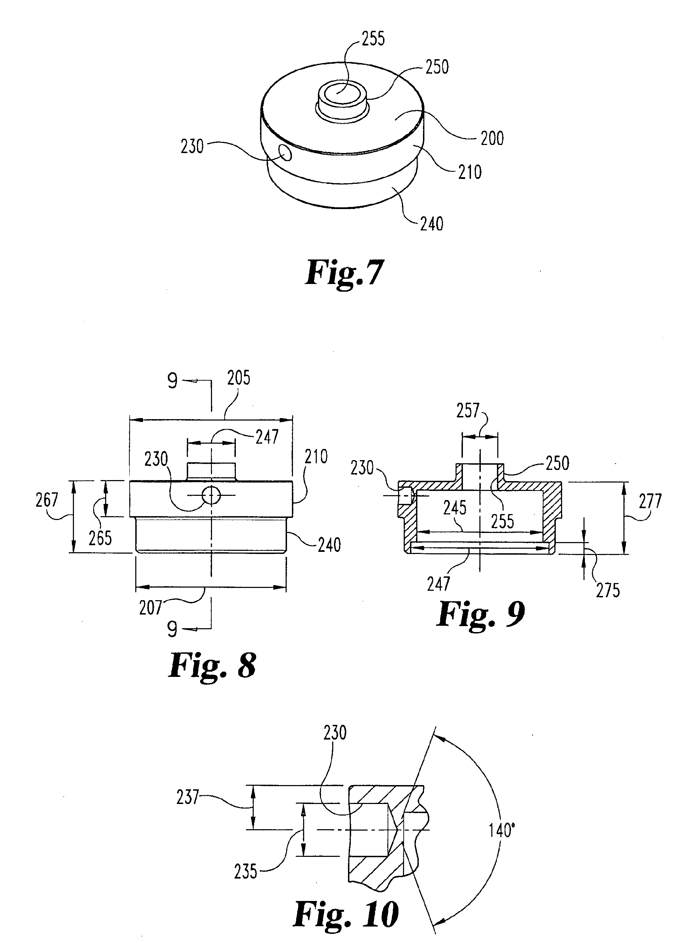

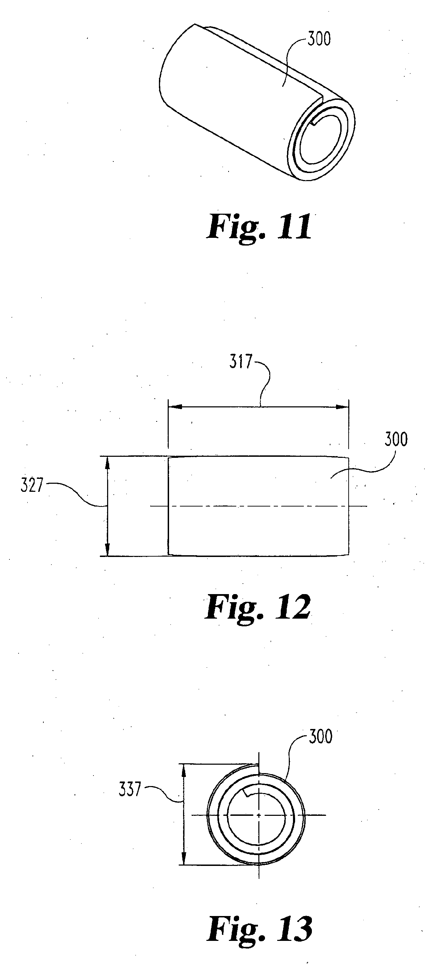

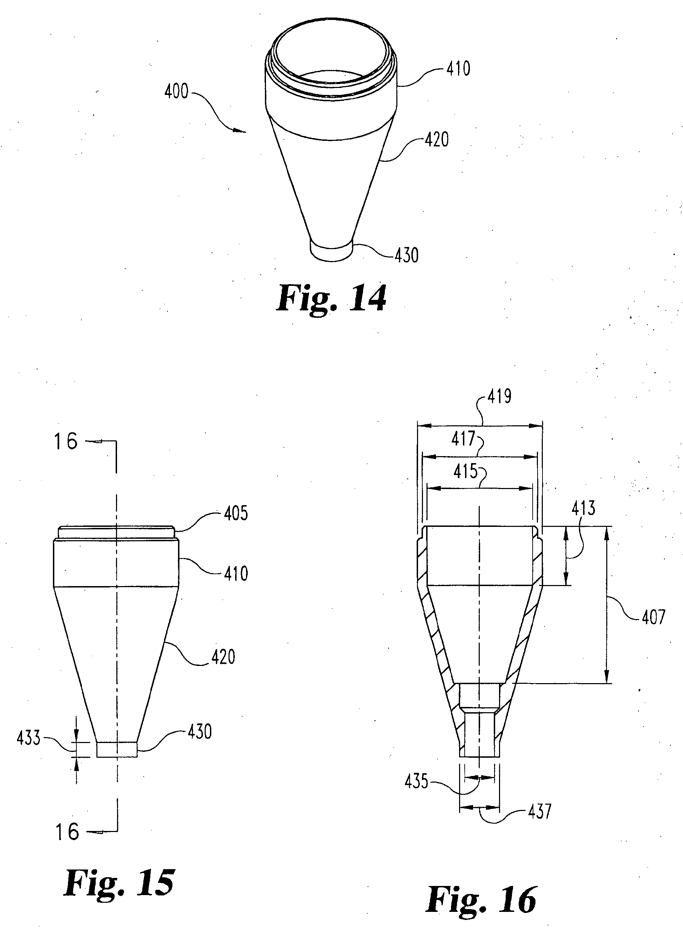

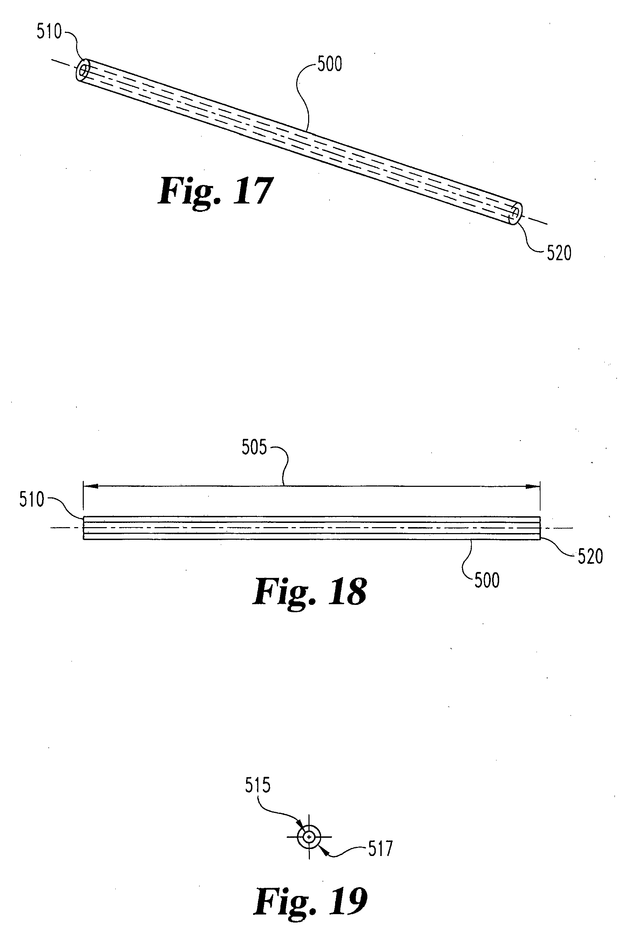

The general aspects of an injector nozzle assembly 10 of the present invention are illustrated in FIGs. 1-3. The two embodiments of an injector nozzle assembly 10 discussed herein differ primarily with respect to the injector jet heads 600, 700. Each embodiment includes an injector pipe 500 (see FIGs. 17-19) that fluidly connects to the supply of a reducing agent such as urea (not illustrated) via SAE nozzle connection 100 (see FIGs. 4-6). The injector pipe 500 passes through injector nozzle cap 200 (see FIGs. 7-10) that includes a spring pin 300 (see FIGs. 11-13). Nozzle cap 200 is connected to an injector nozzle body 400 (see FIGs. 14-16). The injector pipe 500 fluidly connects the fluid supply from connector 100 to the injector jet head 600, 700 at the distal end of the pipe 500.

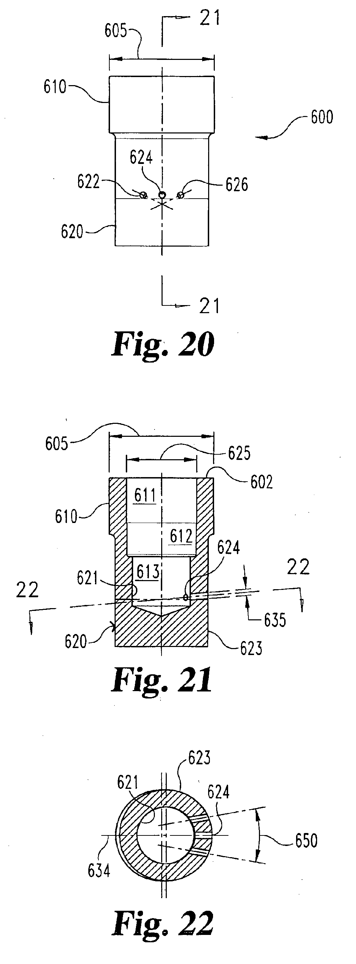

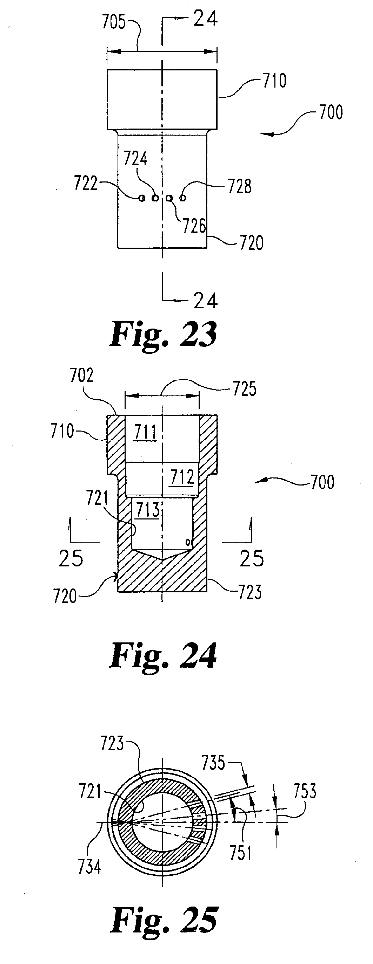

As previously noted, two different embodiments of an injector jet head 600, 700 are disclosed herein. The first embodiment (see FIGs. 20-22) of the injector jet head 600 has three orifices for injection of urea into the exhaust gas stream. The second embodiment (see FIGs. 23-25) of the injector jet head 700 has four orifices for injection of urea into the exhaust gas stream. In these embodiments, as discussed further below, the spray heads introduce the fluid reducing agent in a different manner. The orifices are substantially aligned in a horizontal plane and inject the agent(s) in substantially the same direction along the exhaust gas flow path. The orifices have different angular alignments to provide for the desired spray pattern within the exhaust gas flow path.

With reference to FIGs. 4-6 there are illustrated various aspects of the nozzle connector 100. Connector 100 extends between inlet end 110 and outlet end 120. Most of the length between the inlet end 110 and the outlet end 120 of connector 100 is substantially cylindrical with an outer diameter indicated by the arrows 115. That outer diameter is preferably about 6.3 mm. The connector 100 along much of its length has an inner passage having an inner diameter indicated by the arrows 117 that is preferably about 3 mm. Near the outlet end 120, however, the inner passage is different. Directly adjacent to the outlet end 120 is the first cylindrical internal volume having a diameter indicated by the arrows 125 that is preferably about 6.05 mm. It should be understood that the outer diameter 125 is preferably sized to be slightly larger than the outer diameter of the injector pipe 500 used within the injection nozzle assembly 10. Adjoining the first cylindrical internal volume is a second cylindrical internal volume having a diameter indicated by the arrows 127 that is preferably about 5.97 mm. Again, in the same way that diameter 125 is sized to be slightly larger than the diameter of the injector pipe 500, diameter 127 is sized to be slightly smaller than the outer diameter of the injector pipe 500.

With reference to FIGs. 7-10, there are illustrated various details of the injector nozzle cap 200. The injector nozzle cap 200 has a first cylindrical portion 210 adjacent to a mating portion 240. Mating portion 240 has a smaller outer diameter than the first cylindrical portion 210. First cylindrical portion 210 defines an internal radially extending recess 230 for receiving the spring pin 300. The nozzle cap 200 further includes an axially extending cylindrical protrusion 250 defining an internal passageway 255 for receiving the injector pipe 500.

As illustrated in FIG. 8 the first cylindrical portion 210 has a diameter indicated by the arrows 205 that is preferably about 27.1 mm. The mating portion 240, also preferably cylindrical, has an outer diameter indicated by the arrows 207 that is preferably about 25.0 mm. Similarly, the cylindrical protrusion 250 has an outer diameter indicated by the arrows 247 is preferably about 8.0 mm. The inner diameter 257 of cylindrical protrusion 250 is, of course, sized to receive the injector pipe 500, and thus is preferably about 6.0 mm. The first cylindrical portion 210 has a length indicated by the arrows 265 that is preferably about 6.2 mm and the overall length of first cylindrical portion 210 and mating portion 240 as indicated by the arrows 267 is preferably about 12.4 mm. With reference to FIG. 9 it will be understood that the mating portion 240 has a first portion with an inner diameter as indicated by the arrows 245 that is preferably about 21.0 mm and a second portion with an inner diameter indicated by the arrows 247 that preferably has a diameter of about 23.0 mm. It should be understood that the inner diameter indicated by the arrows 247 is preferably sized to accommodate and mate with an upwardly extending flange 405 of the nozzle body 400. With reference to FIG. 10 there are illustrated some details of the recess 230 in the cap 200 that receives the spring pin 300. The recess 230 has an inner diameter indicated by the arrows 235 that is sized to receive the spring pin 300, preferably about 3.0 mm. Additionally, the arrows 237 represent the distance between the center line of the recess 230 and the top edge of the first cylindrical portion 210, this distance preferably being about 2.5 mm.

With reference to FIGs. 11-13 there are illustrated details of spring pin 300. The spring pin 300, as previously mentioned, is positioned at least partially within the recess 230 of the nozzle cap 200. The spring pin 300 preferably has a length indicated by the arrows 317 of about 5 mm. Spring pin 300 includes diameters as indicated by the arrows 327, 337, diameter 327 preferably being about 2.9 mm and diameter 337 preferably being about 3.0 mm.

With reference to FIGs. 14-16 there are illustrated various aspects of the injector nozzle body 400. Injector nozzle body 400 includes a first cylindrical portion 410 at a first end and a second cylindrical portion 430 at the second end. The first cylindrical portion 410 has a greater outer diameter than the second cylindrical portion 430. A frustoconical portion 420 joins the first cylindrical portion 410 and second cylindrical portion 430 and bridges the difference in diameters between the two cylindrical portions. Extending upwardly from the first cylindrical portion 410 is a flange 405 sized to be received within the mating portion 240 of nozzle cap 200.

With reference to FIG. 16 the first cylindrical portion 410 preferably has an outer diameter as indicated by the arrows 419 that is preferably about 25.0 mm. The flange 405 has an outer diameter indicated by the arrows 417 that is preferably about 23.0 mm. The first cylindrical portion 410 includes an inner diameter indicated by the arrows 415 and is preferably about 21.0 mm. The first cylindrical portion 410 has a length as indicated by the arrows 413 that is preferably about 12.0 mm. The second cylindrical portion 430 has a length as indicated by arrows 433 that is preferably about 3.0 mm and has an outer diameter indicated by the arrows 437 and is preferably about 8.0 mm. The second cylindrical portion 430 and a portion of the internal passage defined by the frustoconical portion 420 is cylindrical and naturally has a diameter as indicated by the arrows 435 that corresponds to the outer diameter of the injector pipe 500, thus preferably being about 6.0 mm. Only air is present in the volume defined between the exterior of the injector pipe 500 and the internal volume defined by the nozzle body and the nozzle cap. However, it is contemplated as within the scope of the invention that thermal insulation thermal insulation might be used in environments in which the fluid reducing agent might otherwise prematurely evaporate and leave residue in the injector pipe 500 that adversely impacted performance.

With reference to FIGs. 17-19 there is illustrated aspects of the injector pipe 500. Pipe 500 extends between proximal end 510 and distal end 520. Pipe 500 has an axial length as indicated by the arrows 505 that is preferably about 118.0 mm. The pipe preferably has no bends in it. Pipe 500 has an outer diameter as indicated by the arrow 517 that is preferably about 6.0 mm. Pipe 500 has an inner wall defining an inner passage for flow of the reducing agent from the proximal end 510 to the distal end 520. The inner passage has an outer diameter as indicated by the arrow 575 that is preferably about 3.0 mm.

With reference to FIGs. 20-22 there is illustrated a first embodiment of a spray head 600. Spray head 600 preferably includes a first larger outer cylindrical portion 610 and a second smaller cylindrical portion 620. The first larger cylindrical portion 610 has an outer diameter as indicated by the arrows 605 that is preferably about 9.0 mm. The second smaller cylindrical portion 620 preferably has an outer diameter of about 8.0 mm. It should be understood that the spray head 600 need not have two differently sized outer portions, but instead might be a single cylinder with any differences being present only in the internal cavity defined within the spray head.

The first cylindrical portion has a first internal volume 611 adjacent the open end 602 of spray head 600. The first internal volume 611 is preferably cylindrical and has a diameter as indicated by the arrows 625, that diameter being sized to be slightly larger than the outer diameter of the injector pipe 500. For those embodiments in which the outer diameter of the injector pipe 500 is about 6.0 mm, the outer diameter 615 of the first internal cylindrical volume 611 is preferably about 6.05 mm. Adjoining the first internal volume is a second internal volume 612 having a diameter being sized to be slightly smaller than the outer diameter of the injector pipe 500. For those embodiments in which the outer diameter of the injector pipe 500 is about 6.0 mm, the outer diameter of the second internal cylindrical volume 612 is preferably about 5.97 mm. That second internal volume extends axially to overlap both the first cylindrical portion 610 and the second cylindrical portion 620.

Adjoining the second internal volume 612 is a third internal volume 613 having a diameter that is preferably about 5.0 mm. The third internal volume 613 is defined in part by wall 621. A plurality of injection orifices 622, 624, 626 are defined between internal wall 621 and external wall 623. Spray head 600 includes three radial orifices, having a middle orifice 624 with adjacent outer orifices 622, 626 spaced apart circumferentially from the middle orifice.

With particular reference to FIG. 22 it should be understood that the middle orifice 624 is preferably aligned in the exhaust system so that the center axis 634 of the middle orifice extends along the flow direction of the exhaust gas passage or conduit, injecting the reducing agent downstream. The outer radial orifices 622, 626 are preferably symmetrically positioned around the center axis 634 and define an angle 650. The angle 650 in one embodiment is preferably about 20.1° such that the outer orifices are offset from the middle orifice by about 10°. Furthermore, as indicated by the lines passing through the outer orifices 622, 626 in FIG. 20, it is contemplated as within the scope of the invention that the radial orifices may also be angled vertically, such vertical angle preferably being no more than 5°. Such vertical angles might be present in all three orifices, only in the outer orifices, or in none of the orifices.

With reference to FIGs. 23-25 there is illustrated a second embodiment of a spray head 700. Spray head 700 preferably includes a first larger outer cylindrical portion 710 and a second smaller cylindrical portion 720. The first larger cylindrical portion 710 has an outer diameter as indicated by the arrows 705 that is preferably about 9.0 mm. The second smaller cylindrical portion 720 preferably has an outer diameter of about 7.25 mm. It should be understood that the spray head 700 need not have two differently sized outer portions, but instead might be a single cylinder with any differences being present only in the internal cavity defined within the spray head.

The first cylindrical portion has a first internal volume 711 adjacent the open end 702 of spray head 700. The first internal volume 711 is preferably cylindrical and has a diameter as indicated by the arrows 725, that diameter being sized to be slightly larger than the outer diameter of the injector pipe 500. For those embodiments in which the outer diameter of the injector pipe 500 is about 6.0 mm, the outer diameter 715 of the first internal cylindrical volume 711 is preferably about 6.05 mm. Adjoining the first internal volume is a second internal volume 712 having a diameter being sized to be slightly smaller than the outer diameter of the injector pipe 500. For those embodiments in which the outer diameter of the injector pipe 500 is about 6.0 mm, the outer diameter of the second internal cylindrical volume 712 is preferably about 5.97 mm. That second internal volume extends axially to overlap both the first cylindrical portion 710 and the second cylindrical portion 720.

Adjoining the second internal volume 712 is a third internal volume 713 having a diameter that is preferably about 5.0 mm. The third internal volume 713 is defined in part by wall 721. A plurality of injection orifices 722, 724, 726, 728 are defined between internal wall 721 and external wall 723. Spray head 700 includes four radial orifices, two inner orifices 724, 726 and two outer orifices 722, 728 spaced apart circumferentially on the exterior of the spray head 700.

With particular reference to FIG. 25 it should be understood that spray head 700 is preferably aligned in the exhaust system so that the four orifices 724 are symmetric along the flow direction of the exhaust gas passage or conduit, injecting the reducing agent downstream. The outer radial orifices 722, 728 are preferably symmetrically positioned around the center axis 734. Each outer orifice is offset from the center axis 734 by an angle as indicated by the arrow 751 that is preferably about 15°. Each inner orifice is offset from the center axis 734 by an angle as indicated by the arrow 753 that is preferably about 5°. The spacing between adjacent orifices (except the two outer orifices) is preferably about 10°. Furthermore, similar to the orifices of the first embodiment of the spray head 600, it is contemplated as within the scope of the invention that the radial orifices of spray head 700 may also be angled vertically (axially toward or away from the length of the injector pipe), such vertical angle preferably being no more than 5°. Such vertical angles might be present in all four orifices, only in the outer orifices, only in the inner orifices, in none of the orifices, or in one axial direction for some orifices (such as the inner orifices) and in the other axial direction for other orifices (such as the outer orifices).

Both spray heads 600, 700 have radial orifices oriented generally parallel to a flow direction of the exhaust gas stream. While the outer orifices are circumferentially offset and inject fluid as much as 10° to 15°, the majority of the reducing agent is injected parallel to the exhaust gas flow stream. This in contrast to prior designs that typically had orifices oriented to spray the fluid stream through the nozzle holes in a direction being substantially at right angles to flow direction of the gas stream and/or were equally spaced around an entire perimeter. Use of the present unique design nonetheless provides satisfactory conversion of urea into ammonia as part of the NOₓ reduction process.

All of the above mentioned components of injector pipe 500, connector 100, injector pipe 500, cap 200, spring pin 300, nozzle body 400, and spray heads 600, 700 are preferably made from stainless steel. These components are even more preferably made from stainless steel type BS EN 1.4307 (1.4306), or 1.4305. Additionally, the connections between these components are preferably made with a nickel braze.

It should be understood that all dimensions referred to herein are merely exemplary of commercial embodiments currently under consideration by the assignee of the present invention. The scope of the present invention is not intended to be restricted to any such dimensions absent language in the claims explicitly so limited.

It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. An injector nozzle assembly (10) for delivering a reducing agent fluid stream into an exhaust gas stream comprising:
a connector (100) having an inlet for fluidly connecting to a reducing agent fluid source;
a cap (200) that is connected to a nozzle body (400) having a frustoconical portion;
an injector pipe (500) having a length along a longitudinal axis and passing through an opening in the cap (200) into and through an at least partially hollow internal volume of the nozzle body (400), the injector pipe (500) having an inlet fluidly connected to the connector (100) and an outlet fluidly connected to a spray head (600, 700);
wherein the spray head (600, 700) includes three or four substantially radial injection orifices, and wherein the injection orifices on the spray head (600, 700) are substantially aligned in a horizontal plane and only oriented generally perpendicular to the longitudinal axis of the injector pipe (500).

2. The injector nozzle assembly (10) of claim 1, wherein the spray head (600) has three injection orifices that include a middle orifice and first and second outer orifices, and wherein the first and second outer orifices are symmetrically positioned on a circumference of the spray head (600, 700) to each side of the middle orifice.

3. The injector nozzle assembly (10) of claim 2, wherein the first and second outer orifices are each offset about ten degrees from the middle orifice.

4. The injector nozzle assembly (10) of claim 3, wherein the injector pipe (500) has no bends and has a pipe diameter, and wherein the spray head (600) has an open end adjacent to a first cylindrical hollow internal volume with a first diameter larger than the pipe diameter and has a second hollow internal volume with a second diameter less than the pipe diameter, the radial orifices being fluidly connected to the second hollow internal volume, the spray head (600) and injector pipe (500) both being made of stainless steel.

5. The injector nozzle assembly (10) of claim 4, wherein each orifice has a diameter of about 0.55 mm, and wherein the nozzle body (400) has a first cylindrical portion at one end that is connected to the cap (200) and a second cylindrical portion at the other end that is connected to the injector pipe (500) and the frustoconical portion is between the cylindrical portions.

6. The injector nozzle assembly (10) of claim 5, further including a spring pin positioned in a radially extending recess in the cap (200), wherein the spring pin protrudes from the recess and extends along the center axis of the flow direction.

7. The injector nozzle assembly (10) of claim 1, wherein the spray head (700) has four injection orifices that include two inner orifices and two outer orifices, and wherein the inner orifices are symmetric on either side of a center axis of the flow direction.

8. The injector nozzle assembly (10) of claim 7, wherein the outer orifices are also symmetric on either side of the center axis of the flow direction.

9. The injector nozzle assembly (10) of claim 7, wherein the inner orifices are spaced from adjacent outer orifices by about ten degrees on a circumference of the spray head (700), and wherein the inner orifices are spaced from each other by about ten degrees on the circumference of the spray head (700).

10. The injector nozzle assembly (10) of claim 9, wherein the injector pipe (500) has no bends and has a pipe diameter, and wherein the spray head (700) has an open end adjacent to a first cylindrical hollow internal volume with a first diameter larger than the pipe diameter and has a second hollow internal volume with a second diameter less than the first diameter, the radial orifices fluidly connected to the second hollow internal volume, the spray head (700) and injector pipe (500) both being made of stainless steel.

11. The injector nozzle assembly (10) of claim 10, wherein each orifice has a diameter of about 0.5 mm, and/or further including a spring pin positioned in a radially extending recess in the cap (200), wherein the spring pin protrudes from the recess and extends along the center axis of the flow direction.

12. A method of delivering a reducing agent into an exhaust gas stream of an internal combustion engine comprising:
passing the reducing agent through a connector (100) to an inlet of an injector pipe (500) that passes through an injector cap (200) connected to a nozzle body (400), wherein the injector pipe (500) is coaxial along a portion of its length with the nozzle body (400);
spraying the reducing agent that exits an outlet of the injector pipe (500) through a spray head (600, 700) having three or four orifices substantially aligned in a horizontal plane and only oriented generally perpendicular to a longitudinal axis of the injector pipe (500).

13. The method of claim 12, wherein the reducing agent is sprayed through a spray head (600) having three orifices that include a middle orifice symmetric about a center axis of the flow direction of the exhaust gas stream and first and second orifices symmetrically positioned to either side of the middle orifice.

14. The method of claim 13, wherein the reducing agent exits the spray head through the first and second orifices at an angle of no more than about ten degrees relative to the center axis of the flow direction of the exhaust gas stream.

15. The method of claim 12 , wherein the reducing agent is sprayed through a spray head (700) having four orifices that are symmetric about a center axis of the flow direction of the exhaust gas stream, and wherein a center of each orifice is angled with respect to the center axis by no more than about fifteen degrees.

16. The method of claim 15, wherein the reducing agent exits the spray head through an inner pair and an outer pair of orifices, and wherein the inner pair of orifices are angled with respect to the center axis by no more than about five degrees.

## Patentansprüche

1. Injektionsdüsenanordnung (10) zum Zuführen eines Reduktionsmittelfluidstroms in einen Abgasstrom, mit:
einem Verbinder (100) mit einem Einlass zum fluidleitenden Anschließen an eine Reduktionsmittelquelle,
einem Deckel (200), der mit einem Düsenkörper (400) verbunden ist, welcher einen kegelstumpfförmigen Abschnitt aufweist,
einem Einspritzrohr (500), das eine Länge entlang einer Längsachse hat und durch eine Öffnung in dem Deckel (200) in den und durch ein zumindest teilweise hohles inneres Volumen des Düsenkörpers (400) führt, wobei das Einspritzrohr (500) einen Einlass, der fluidleitend mit dem Verbinder (100) verbunden ist, und einen Auslass hat, der fluidleitend mit einem Sprühkopf (600, 700) verbunden ist,
wobei der Sprühkopf (600, 700) drei oder vier im Wesentlichen radiale Injektionsöffnungen aufweist, und wobei die Injektionsöffnungen an dem Sprühkopf (600, 700) im Wesentlichen in einer horizontalen Ebene ausgerichtet und nur allgemein rechtwinklig zu der Längsachse der Einspritzrohr (500) gerichtet sind.

2. Injektionsdüsenanordnung (10) nach Anspruch 1, bei der der Sprühkopf (600) drei Injektionsöffnungen hat, die eine mittlere Öffnung und erste und zweite äußere Öffnungen einschließen, und bei der die ersten und zweiten äußeren Öffnungen auf einem Umfang des Sprühkopfes (600, 700) symmetrisch beidseits der mittleren Öffnung angeordnet sind.

3. Injektionsdüsenanordnung (10) nach Anspruch 2, bei der die ersten und zweiten äußeren Öffnungen jeweils ungefähr 10 Grad von der mittleren Öffnung abgewinkelt sind.

4. Injektionsdüsenanordnung (10) nach Anspruch 3, bei der das Einspritzrohr (500) keine Biegungen aufweist und einen Leitungsdurchmesser hat, und bei der der Sprühkopf (600) ein offenes Ende benachbart einem ersten zylindrischen hohlen Innenvolumen mit einem ersten Durchmesser größer als der Leitungsdurchmesser hat und ein zweites hohles Innenvolumen mit einem zweiten Durchmesser kleiner als der Leitungsdurchmesser hat, wobei die radialen Öffnungen fluidleitend mit dem zweiten hohlen Innenvolumen verbunden sind und der Sprühkopf (600) und das Einspritzrohr (500) beide aus rostfreiem Stahl bestehen.

5. Injektionsdüsenanordnung (10) nach Anspruch 4, bei der jede Öffnung einen Durchmesser von ungefähr 0,55 mm hat, und bei der der Düsenkörper (400) einen ersten zylindrischen Abschnitt an einem Ende, der mit dem Deckel (200) verbunden ist, und einen zweiten zylindrischen Abschnitt an dem anderen Ende aufweist, der mit dem Einspritzrohr (500) verbunden ist, wobei der kegelstumpfförmige Abschnitt sich zwischen den zylindrischen Abschnitten befindet.

6. Injektionsdüsenanordnung (10) nach Anspruch 5, ferner umfassend einen Federstift, der in einer radial verlaufenden Vertiefung in dem Deckel (200) angeordnet ist, wobei der Federstift aus der Vertiefung hervorsteht und sich längs der Mittelachse der Strömungsrichtung erstreckt.

7. Injektionsdüsenanordnung (10) nach Anspruch 1, bei der der Sprühkopf (700) vier Injektionsöffnungen hat, die zwei innere Öffnungen und zwei äußere Öffnungen umfassen, und bei der die inneren Öffnungen beidseits einer Mittelachse der Strömungsrichtung symmetrisch angeordnet sind.

8. Injektionsdüsenanordnung (10) nach Anspruch 7, bei der die äußeren Öffnungen ebenfalls beidseits der Mittelachse der Strömungsrichtung symmetrisch angeordnet sind.

9. Injektionsdüsenanordnung (10) nach Anspruch 7, bei der die inneren Öffnungen von benachbarten äußeren Öffnungen um etwa 10 Grad auf einem Umfang des Sprühkopfes (700) beabstandet sind, und bei der die inneren Öffnungen voneinander einen Abstand von ungefähr 10 Grad auf dem Umfang des Sprühkopfs (700) haben.

10. Injektionsdüsenanordnung nach Anspruch 9, bei der das Einspritzrohr (500) keine Biegungen hat und einen Leitungsdurchmesser aufweist, und bei der der Sprühkopf (700) ein erstes offenes Ende benachbart einem ersten zylindrischen hohlen Innenvolumen mit einem ersten Durchmesser größer als der Leitungsdurchmesser hat und ein zweites hohles Innenvolumen mit einem zweiten Durchmesser kleiner als der erste Durchmesser hat, wobei die radialen Öffnungen fluidleitend mit dem zweiten hohlen Innenvolumen verbunden sind und der Sprühkopf (700) sowie das Einspritzrohr (500) beide aus rostfreiem Stahl bestehen.

11. Injektionsdüsenanordnung nach Anspruch 10, bei der jede Öffnung einen Durchmesser von ungefähr 0,5 mm hat, und/oder ferner umfassend einen Federstift, der in einer radial verlaufenden Vertiefung in dem Deckel (200) angeordnet ist, wobei der Federstift aus der Vertiefung hervorsteht und sich entlang der Mittelachse der Strömungsrichtung erstreckt.

12. Verfahren zum Zuführen eines Reduktionsmittels in einen Abgasstrom eines Verbrennungsmotors, umfassend:
Führen des Reduktionsmittels durch einen Verbinder (100) zu einem Einlass eines Einspritzrohrs (500), das durch einen Injektordeckel (200) führt, der mit einem Düsenkörper (400) verbunden ist, wobei das Einspritzrohr (500) längs eines Abschnitts seiner Länge koaxial zum Düsenkörper ist,
Versprühen des aus einem Auslass des Einspritzrohrs (500) austretenden Reduktionsmittels durch einen Sprühkopf (600, 700) mit drei oder vier Öffnungen, die im Wesentlichen in einer horizontalen Ebene ausgerichtet und nur allgemein rechtwinklig zu einer Längsachse der Einspritzrohr (500) gerichtet sind.

13. Verfahren nach Anspruch 12, bei dem das Reduktionsmittel durch einen Sprühkopf (600) versprüht wird, der drei Öffnungen hat, die eine mittlere Öffnung symmetrisch um eine Mittelachse der Strömungsrichtung des Abgasstroms und erste und zweite Öffnungen umfassen, die beidseits der mittleren Öffnung symmetrisch angeordnet sind.

14. Verfahren nach Anspruch 13, bei dem das Reduktionsmittel aus dem Sprühkopf durch die ersten und zweiten Öffnungen unter einem Winkel von nicht mehr als ungefähr 10 Grad relativ zur Mittelachse der Strömungsrichtung des Abgasstroms austritt.

15. Verfahren nach Anspruch 12, bei dem das Reduktionsmittel durch einen Sprühkopf (700) versprüht wird, der vier Öffnungen hat, die symmetrisch um eine Mittelachse der Strömungsrichtung des Abgasstroms angeordnet sind, und bei dem eine Mitte jeder Öffnung bezüglich der Mittelachse um nicht mehr als ungefähr 15 Grad geneigt ist.

16. Verfahren nach Anspruch 15, bei dem das Reduktionsmittel aus dem Sprühkopf durch ein inneres Paar und ein äußeres Paar von Öffnungen austritt, und bei dem das innere Paar Öffnungen bezüglich der Mittelachse um nicht mehr als ungefähr 5 Grad abgewinkelt ist.

## Revendications

1. Ensemble (10) de buse d'injecteur destiné à délivrer un courant de fluide d'agent de réduction dans un flux de gaz d'échappement comprenant :
un connecteur (100) comportant un orifice d'entrée pour connexion fluidique avec une source de fluide d'agent de réduction ;
un capuchon (200) qui est connecté à un corps de buse (400) comportant une partie tronconique ;
un tuyau d'injecteur (500) présentant une longueur le long d'un axe longitudinal et passant à travers une ouverture dans le capuchon (200) dans et à travers un volume interne au moins partiellement creux du corps de buse (400), le tuyau d'injecteur (500) comportant un orifice d'entrée en connexion fluidique avec le connecteur (100) et un orifice de sortie en connexion fluidique avec une tête de vaporisation (600, 700) ;
dans lequel la tête de vaporisation (600, 700) comprend trois ou quatre orifices d'injection sensiblement radiaux, et dans lequel les orifices d'injection sur la tête de vaporisation (600, 700) sont sensiblement alignés dans un plan horizontal et uniquement orientés de manière généralement perpendiculaire à l'axe longitudinal du tuyau d'injecteur (500).

2. Ensemble (10) de buse d'injecteur selon la revendication 1, dans lequel la tête de vaporisation (600) comporte trois orifices d'injection qui comprennent un orifice intermédiaire et des premier et deuxième orifices externes, et dans lequel les premier et deuxième orifices externes sont positionnés de manière symétrique sur une circonférence de la tête de vaporisation (600, 700) de chaque côté de l'orifice intermédiaire.

3. Ensemble (10) de buse d'injecteur selon la revendication 2, dans lequel les premier et deuxième orifices externes sont chacun décalés d'environ dix degrés par rapport à l'orifice intermédiaire.

4. Ensemble (10) de buse d'injecteur selon la revendication 3, dans lequel le tuyau d'injecteur (500) ne comporte aucune courbure et présente un diamètre de tuyau, et dans lequel la tête de vaporisation (600) comporte une extrémité ouverte adjacente à un premier volume interne creux cylindrique avec un premier diamètre plus grand que le diamètre de tuyau et comporte un deuxième volume interne creux avec un deuxième diamètre inférieur au diamètre de tuyau, les orifices radiaux étant en connexion fluidique avec le deuxième volume interne creux, la tête de vaporisation (600) et le tuyau d'injecteur (500) et en tous deux composés d'acier inoxydable.

5. Ensemble (10) de buse d'injecteur selon la revendication 4, dans lequel chaque orifice présente un diamètre d'environ 0,55 mm, et dans lequel le corps de buse (400) comporte une première partie cylindrique au niveau d'une extrémité qui est connectée au capuchon (200) et une deuxième partie cylindrique au niveau de l'autre extrémité qui est connectée au tuyau d'injecteur (500), et la partie tronconique se situe entre les parties cylindriques.

6. Ensemble (10) de buse d'injecteur selon la revendication 5, comprenant en outre un axe de ressort positionné dans un évidement s'étendant de manière radiale dans le capuchon (200), dans lequel l'axe de ressort fait saillie depuis l'évidement et s'étend le long de l'axe central de la direction de circulation.

7. Ensemble (10) de buse d'injecteur selon la revendication 1, dans lequel la tête de vaporisation (700) comporte quatre orifices d'injection qui comprennent deux orifices internes et deux orifices externes, et dans lequel les orifices internes sont symétriques de chaque côté d'un axe central de la direction de circulation.

8. Ensemble (10) de buse d'injecteur selon la revendication 7, dans lequel les orifices externes sont également symétriques de chaque côté de l'axe central de la direction de circulation.

9. Ensemble (10) de buse d'injecteur selon la revendication 7, dans lequel les orifices internes sont espacés des orifices externes adjacents d'environ dix degrés sur une circonférence de la tête de vaporisation (700), et dans lequel les orifices internes sont espacés l'un de l'autre d'environ dix degrés sur la circonférence de la tête de vaporisation (700).

10. Ensemble (10) de buse d'injecteur selon la revendication 9, dans lequel le tuyau d'injecteur (500) ne comporte pas de courbure et présente un diamètre de tuyau, et dans lequel la tête de vaporisation (700) comporte une extrémité ouverte adjacente à un premier volume interne creux cylindrique avec un premier diamètre plus grand que le diamètre de tuyau et comporte un deuxième volume interne creux avec un deuxième diamètre inférieur au premier diamètre, les orifices radiaux en connexion fluidique avec le deuxième volume interne creux, la tête de vaporisation (700) et le tuyau d'injecteur (500) étant tous deux composés d'acier inoxydable.

11. Ensemble (10) de buse d'injecteur selon la revendication 10, dans lequel chaque orifice présente un diamètre d'environ 0,5 mm, et/ou comprenant en outre un axe de ressort positionné dans un évidement s'étendant radialement dans le capuchon (200), dans lequel l'axe de ressort fait saillie depuis l'évidement et s'étend le long de l'axe central de la direction de circulation.

12. Procédé consistant à délivrer un agent de réduction dans un flux de gaz d'échappement d'un moteur à combustion interne comprenant les étapes consistant à :
faire passer l'agent de réduction à travers un connecteur (100) vers un orifice d'entrée d'un tuyau d'injecteur (500) qui passe à travers un capuchon d'injecteur (200) connecté à un corps de buse (400), dans lequel le tuyau d'injecteur (500) est coaxial le long d'une partie de sa longueur avec le corps de buse (400) ;
vaporiser l'agent de réduction qui sort d'un orifice de sortie du tuyau d'injecteur (500) par l'intermédiaire d'une tête de vaporisation (600, 700) comportant trois ou quatre orifices sensiblement alignés dans un plan horizontal et uniquement orientés généralement perpendiculaires à un axe longitudinal du tuyau d'injecteur (500).

13. Procédé selon la revendication 12, dans lequel l'agent de réduction est vaporisé par l'intermédiaire d'une tête de vaporisation (600) comportant trois orifices qui comprennent un orifice intermédiaire symétrique autour d'un axe central de la direction de circulation du flux de gaz d'échappement et des premier et deuxième orifices positionnés de manière symétrique de chaque côté de l'orifice intermédiaire.

14. Procédé selon la revendication 13, dans lequel l'agent de réduction sort de la tête de vaporisation par l'intermédiaire des premier et deuxième orifices à un angle n'excédant pas environ dix degrés par rapport à l'axe central de la direction de circulation du flux de gaz d'échappement.

15. Procédé selon la revendication 12, dans lequel l'agent de réduction est vaporisé par l'intermédiaire d'une tête de vaporisation (700) comportant quatre orifices qui sont symétriques autour d'un axe central de la direction de circulation du flux de gaz d'échappement, et dans lequel un centre de chaque orifice est incliné par rapport à l'axe central de pas plus d'environ quinze degrés.

16. Procédé selon la revendication 15, dans lequel l'agent de réduction sort de la tête de vaporisation par l'intermédiaire d'une paire d'orifices internes et d'une paire d'orifices externes, et dans lequel la paire d'orifices internes est inclinée par rapport à l'axe central de pas plus d'environ cinq degrés.
